# EUROPÄISCHE PATENTSCHRIFT

(11) **EP 1 886 961 B1**
(45) Veröffentlichungstag und Bekanntmachung des Hinweises auf die Patenterteilung: **23.12.2009**
(21) Anmeldenummer: 07114043.8
(22) Anmeldetag: 08.08.2007
(51) Int. Cl.: B66B 7/06, B29D 29/10, F16G 5/06, F16G 5/14, D07B 1/22

(54) **Aufzugriemen für eine Aufzuganlage und Verfahren zur Herstellung eines solchen Aufzugriemens**
Lift belt for a lift system and method for manufacturing such a lift belt
Courroie d'élévateur pour un élévateur et procédé de fabrication d'une telle courroie d'élévateur

(30) Priorität: 11.08.2006 EP 06118824; 11.08.2006 EP 06118816; 11.08.2006 EP 06118817; 11.08.2006 EP 06118819; 22.12.2006 EP 06127128
(43) Veröffentlichungstag der Anmeldung: 13.02.2008
(73) Patentinhaber: Inventio AG, 6052 Hergiswil (CH)
(72) Erfinder: Ach, Ernst, 6030 Ebikon (CH)
(74) Vertreter: Gaussmann, Andreas

(56) Entgegenhaltungen:
- EP-A- 1 674 419
- EP-A1- 0 596 713
- EP-A2- 1 063 448
- WO-A-2005/054569
- AU-A- 2 468 771
- DE-U1- 9 309 494
- FR-A1- 2 570 066
- US-A- 4 773 896
- US-A1- 4 078 443
- US-A1- 4 235 119
- US-B1- 6 251 977

## Beschreibung

Die vorliegende Erfindung betrifft eine Aufzugsanlage mit einem Aufzugriemen, einen Aufzugriemen für eine solche Aufzuganlage sowie ein Verfahren zur Herstellung eines solchen Aufzugriemens.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens einen Antrieb mit mindestens je einem Treibrad auf, das über einen oder mehrere Riemen die Aufzugkabine und das Gegengewicht trägt und/oder die erforderlichen Antriebskräfte auf diese überträgt. Ein Treibrad kann dabei in an sich bekannter Weise als Treibscheibe oder gleichermaßen als Rad mit kleinerem Durchmesser, insbesondere auch als eine Abtriebswelle des Antriebs selbst, ausgebildet sein.

Die Aufzugkabine und das Gegengewicht können über denselben mindestens einen Trag- und Antriebsriemen getragen und angetrieben sein, der über das mindestens eine Treibrad geführt ist. Alternativ können die Aufzugkabine und das Gegengewicht auch über mindestens einen über eine Umlenkrolle laufenden Tragriemen miteinander gekoppelt sein, so dass sich das Gegengewicht hebt, wenn die Aufzugkabine abgesenkt wird und umgekehrt, wobei der Antrieb der Aufzugskabine und des Gegengewichts durch eine Antriebseinheit über mindestens einen separaten Antriebsriemen erfolgt. Während bei Antriebsriemen durch Treibräder Zugkräfte auf Antriebsriemen übertragen werden, um die Aufzugkabine bzw. das Gegengewicht zu bewegen, werden reine Tragriemen nicht über Treibräder, sondern lediglich über Umlenkelemente, insbesondere drehbare oder feste Umlenkrollen umgelenkt und nehmen die Gewichtskraft der Aufzugkabine bzw. des Gegengewichts auf. Bei den meisten Aufzugsanlagen werden die Trag- und die Antriebsfunktion durch denselben mindestens einen Trag- und Antriebsriemen erfüllt.

Ein Aufzugriemen nach der vorliegenden Erfindung kann für jede der oben beschriebenen Funktionen eingesetzt werden, also gleichermaßen als Tragriemen, als Antriebsriemen oder als Trag-und Antriebsriemen, als einer von mehreren parallel angeordneten Riemen oder als Einzelriemen.

Wo zwischen Treibrädern und Umlenkrollen keine Unterscheidung erforderlich ist, werden diese im Folgenden allgemein als Riemenräder bezeichnet.

Aus der EP 1 060 305 B1 ist ein Aufzugriemen nach dem Oberbegriff des Anspruchs 1 mit einem Riemenkörper aus Polyurethan bekannt, in dem eine Zugträgeranordnung mit Seilen aus mehrfach verdrillten Drähten zur Übertragung einer Zugkraft in Längsrichtung des Aufzugriemens angeordnet ist.

Wenn die Zugträger bei der Herstellung dieses Aufzugriemens in dem Riemenkörper eingebettet werden, können sich die einzelnen Zugträger relativ zueinander verschieben. Hierdurch kann es zu einer ungünstigen Anordnung der Zugträger in Querrichtung des Riemens kommen. Beispielsweise können zwei Zugträger eng benachbart im Riemenkörper liegen oder einander sogar berühren. Da die Zugträger bei der Umschlingung einer Riemenscheibe, insbesondere eines Treibrades durch die von ihnen übertragenen Zugkräfte teilweise erhebliche Druckspannungen auf den Riemenkörper ausüben, besteht die Gefahr, dass der Riemenkörper durch die erhöhte lokale Belastung, die bei eng benachbarten, insbesondere einander berührenden Zugträgern auftritt, beschädigt wird. Im Extremfall können eng zusammenliegende Zugträger den Riemenkörper durchschneiden.

Ist, wie in der EP 1 060 305 B1, der Aufzugriemen konturiert, besteht weiter die Gefahr, dass Zugträger während der Herstellung in Bereichen des Riemenkörpers mit geringerer Wandstärke positioniert werden, welche die von den Zugträger ausgeübten Druck- und Schubkräfte schlechter aufnehmen und ableiten können und somit einem erhöhten Schädigungsrisiko ausgesetzt sind.

Aus US 4078443 ist ein Antriebsriemen mit Zugträgern bekannt. Die Zugträger können in einem Versteifungselement eingeschlossen sein, oder alternativ dazu mit einem Versteifungselement verklebt sein.

In AU 24687 71 A ist ein Tragmittel beschrieben, welches für Aufzugssysteme eingesetzt werden kann. Dieses Tragmittel weist parallel angeordnete Zugträger auf, wobei die sich gegenüberliegenden Flächen des Tragmittels mit elastomerem Material geschützt sind. Dabei können mehrere Schichten von parallel angeordneten Zugträgern übereinander angeordnet sein, wobei die einzelnen Schichten durch Streifen von elastomerem Material voneinander getrennt sind.

Aus WO 2005/054569 A2 ist ein Zugorgan bekannt, welches mindestens ein Litzenseil aus zugfestem Material umfasst. Die zentrale Litze dieses Litzenseils kann von einer flexiblen thermoplastischen Kunststoffschicht umhüllt sein, sodass die zentrale Litze mit den peripheren Litzen über diese Kuststoffschicht verbunden ist.

Aus US 4773896 ist ein V-förmiger Antriebsriemen bekannt. Dieser Riemen weist in Längsrichtung verlaufende Verstärkungselemente auf, welche aus Metall, Glasfaser, oder Material mit ähnlicher Rezssfestigkeit gefertigt sein können.

Eine Aufgabe der vorliegenden Erfindung ist es daher, einen Aufzugriemen zur Verfügung zu stellen, bei dem die Positionierung der Zugträger innerhalb des Riemenkörpers verbessert ist.

Zur Lösung dieser Aufgabe ist ein Aufzugriemen nach dem Oberbegriff des Anspruchs 1 durch dessen kennzeichnende Merkmale weitergebildet. Anspruch 13 stellt das zugehörige Herstellungsverfahren und Anspruch 16 eine Aufzuganlage mit einem solchen Aufzugriemen unter Schutz.

Ein erfindungsgemäßer Aufzugriemen für eine Aufzuganlage umfasst einen Riemenkörper, in dem eine Zugträgeranordnung mit wenigstens zwei Zugträgern zur Übertragung einer Zugkraft in Längsrichtung des Aufzugriemens angeordnet ist. Die Zugträger der Zugträgeranordnung umfassen Litzen oder Seile, vorzugsweise aus Drähten oder Kunststofffasergarnen, besonders bevorzugt aus Stahldrähten. Zwischen wenigstens zwei benachbarten Zugträgern der Zugträgeranordnung ist ein flexibler Profilkörper angeordnet, der diese Zugträger zueinander beabstandet.

Durch den zwischen zwei benachbarten Zugträgern angeordneten Profilkörper kann beim Herstellvorgang ein Mindestabstand der beiden Zugträger zueinander vorgegeben werden. Hierdurch kann vermieden werden, dass die beiden Zugträger im gebrauchsfertigen Aufzugriemen zu nahe beieinander liegen oder einander gar berühren, was zu einer inhomogenen Kräfteverteilung im Aufzugriemen und einer lokal höheren Belastung des Riemenkörpers führen würde.

In einer bevorzugten Ausführungsform der vorliegenden Erfindung liegen die beiden benachbarten Zugträger formschlüssig an dem dazwischen liegenden Profilkörper an, so dass ihre gegenseitige relative Lage mit hoher Genauigkeit vorgegeben ist. Bevorzugt ist zwischen mehreren, besonders bevorzugt zwischen allen Zugträgern der Zugträgeranordnung je wenigstens ein Profilkörper angeordnet. Dadurch kann auch die Zugträgeranordnung insgesamt lagerichtig im Riemenkörper positioniert werden. Werden beispielsweise bei der Riemenherstellung im Extrusionsverfahren alternierend Zugträger und Profilkörper nebeneinander kontinuierlich und lagerichtig dem Riemenextrusionswerkzeug zugeführt und dabei in einen extrudierten Riemenkörper eingebettet, so verhindern die Profilkörper größere Abweichungen der Zugträger von ihrer vorgesehenen Lage im Riemenkörper.

Zugträger, die an den zwischen ihnen angeordneten Profilkörpern anliegen, können vorteilhafterweise auch Kräfte in Querrichtung des Aufzugriemens übertragen, indem sie sich formschlüssig gegeneinander abstützen. Im Gegensatz zu herkömmlichen Aufzugriemen, in denen die Zugträger solche Querkräfte nur über den in der Regel weicheren Riemenkörper übertragen können, kann bei erfindungsgemäßen Aufzugriemen die zulässige Belastung des Riemenkörpers in Querrichtung erhöht werden, was beispielsweise in Anwendungsfällen vorteilhaft ist, in welchen der Aufzugriemen durch seitliche Bordscheiben auf mindestens einem der Riemenräder geführt wird. Zusätzlich kann die formschlüssige Abstützung benachbarter Zugträger an den dazwischen liegenden Profilkörpern den Aufzugriemen in Querrichtung versteifen, was einerseits einer Deformation des Aufzugriemens unter Längsbelastung entgegenwirkt und andererseits die Formbeständigkeit des Riemenquerschnitts gewährleistet, wenn sich der Aufzugriemen zwischen zwei Riemenrädern einer Aufzugsanlage um seine Längsachse verdrehen muss.

Bevorzugt weisen alle Profilkörper denselben Querschnitt auf, was eine äquidistante Verteilung der Zugträger und die Ausbildung eines homogenen Aufzugriemens ermöglicht. Zusätzlich sinkt der Aufwand für die Herstellung und Bevorratung der Profilkörper sowie für deren lagerichtige Anordnung beim Herstellvorgang, da nicht darauf geachtet werden muss, welcher Profilkörper zwischen welchen Zugträgern anzuordnen ist.

Gleichwohl können auch mit querschnittsgleichen Profilkörpern unterschiedliche Abstände einzelner Zugträger zueinander erzeugt werden, indem zwischen verschiedenen Zugträgern entweder eine unterschiedliche Anzahl von Profilkörpern angeordnet wird, oder indem Profilkörper verwendet werden, die beispielsweise rechteckige Querschnitte aufweisen und entweder in Querlage oder in Hochlage zwischen den Zugträgern eingebettet werden. Damit ist es beispielsweise möglich, die Zugträger im Bereich einer Keilrippe des Riemenkörpers mit geringerem Abstand anzuordnen und gleichzeitig einen größeren Abstand zwischen benachbarten Zugträgern benachbarter Keilrippen zu gewährleisten. Dadurch kann beispielsweise eine Anordnung von Zugträgern in den dünnwandigen Riemenkörperbereichen zwischen benachbarten Keilrippen vermieden werden.

Alternativ oder zusätzlich können wenigstens zwei Profilkörper unterschiedliche Querschnittsformen aufweisen. Auch hierdurch ist es möglich, unterschiedliche Abstände zwischen jeweils zwei Zugträgern zu realisieren. Außerdem können die Querschnittsformen und/oder Querschnittsgrößen der Profilkörper an Zugträger mit unterschiedlicher Außenkontur, insbesondere mit unterschiedlichem Durchmesser angepasst werden, wodurch deren gegenseitige formschlüssige Abstützung verbessert wird.

Die Profilkörper weisen bevorzugt im Wesentlichen kreisförmige, ovale, T-förmige, Doppel-T-förmige, U-Förmige, drei- und/oder viereckige Querschnitte auf. Geometrisch einfache Querschnittsformen, etwa kreisförmige, ovale, drei- oder viereckige Querschnitte sind einfach, beispielsweise durch Extrusion, herzustellen. Bei punktsymmetrischen Querschnitten, insbesondere bei runden oder quadratischen Querschnitten muss vorteilhafterweise nicht auf eine orientierungsrichtige Platzierung der Profilkörper während des Herstellvorgangs geachtet werden. Andere Querschnittsformen, insbesondere Doppel-T- bzw. sanduhrförmige Querschnitte können die lagerichtige Positionierung der Zugträger auch in Richtung der Riemendicke verbessern.

Die Profilkörper erstrecken sich in Längsrichtung des Aufzugriemens bevorzugt im Wesentlichen über die gesamte Länge des Aufzugriemens, vorteilhafterweise parallel zu den Zugträgern.

Somit stellen sie überall die lagerichtige Anordnung der Zugträger sicher und können zudem einen Teil der Zugkräfte des Aufzugriemens übertragen, so dass dessen Festigkeit in Längsrichtung sich vorteilhaft erhöht.

Die Profilkörper sind bevorzugt aus einem thermoplastischen Kunststoff, insbesondere Polyamid (PA), Polyethylen (PE), Polyester, insbesondere Polyethylenterephthalat (PET) und/oder Polycarbonat (PC), Polypropylen (PP), Polybutylenterephthalat (PBT), Polyethersulfon (PES), Polytetrafluorethylen (PTFE), Polyvinylchlorid (PVC) oder einem Polyblend aus mehreren thermoplastischen Kunststoffen hergestellt. Solche Profilkörper weisen eine ausreichende Biegeelastizität sowie eine ausreichende Festigkeit zur Abstützung der Zugträger beim Herstellvorgang auf, sind kostengünstig herzustellen und erhöhen das Gewicht des gesamten Aufzugriemens bevorzugt nur geringfügig oder können es sogar verringern.

Besonders bevorzugt weist der Riemenkörper auf einer Traktionsseite eine oder mehrere in Längsrichtung des Aufzugriemens orientierte Keilrippen zum Eingriff in im Wesentlichen komplementäre Keilrillen eines Treibrades auf. Durch die dabei resultierende Keilwirkung kann bei gleicher Längskraft eine höhere Treibfähigkeit dargestellt werden. Außerdem wird der Aufzugriemen in vorteilhafter Weise durch die Keilrippen in Querrichtung auf den Riemenrädern geführt.

Insbesondere bei solchen Keilrippenriemen ist die lagerichtige Anordnung der Zugträger im Riemenkörper vorteilhaft, da dadurch die Zugträger lagerichtig in Bezug auf die Keilrippen positioniert werden können. Wie vorstehend ausgeführt, kann beispielsweise vermieden werden, dass Zugträger im Bereich eines zwischen benachbarten Keilrippen liegenden Rillengrundes in den Riemenkörper eingebettet werden.

Die Keilrippen weisen bevorzugt einen Flankenwinkel von 60° bis 120° auf, wobei der Bereich von 80° bis 100° zu bevorzugen ist. Als Flankenwinkel ist der zwischen beiden Seitenflächen (Flanken) einer Keilrippe vorhandene Winkel bezeichnet. Dieser Bereich hat sich als idealer Bereich herausgestellt, bei welchem einerseits das Verklemmen der Keilrippen in den Keilrillen des Treibrads und damit Querschwingungen im Aufzugriemen vermieden werden und andererseits eine sichere Führung des Aufzugriemens auf den mit Keilrillen versehenen Riemenrädern gewährleistet ist.

Als Material für den Riemenkörper kommt insbesondere ein Elastomer, bevorzugt Polyurethan, Polychloropren, Naturkautschuk oder Ethylen-Propylen-Dien-Kautschuk in Frage. Ein Riemenkörper aus einem solchen Material ist, beispielsweise durch Extrudieren, einfach herzustellen und ist besonders gut geeignet, Traktionskräfte von einem Treibrad in die Zugträger einzuleiten. Hierzu kann der Riemenkörper auf einer zum Eingriff mit einem solchen Treibrad vorgesehenen Traktionsseite eine Beschichtung aufweisen, die den Reibwert und damit die Treibfähigkeit noch erhöht. Gleichermaßen kann die Beschichtung auch einen geringeren Reibwert aufweisen, falls beispielsweise durch die Keilwirkung der Keilrippen bereits eine ausreichend hohe Treibfähigkeit gewährleistet ist. Hierdurch kann ein Verklemmen der Keilrippen in den Rillen des Treibrades vermieden werden. Eine solche reibungsmindernde Beschichtung kann zudem die Abriebfestigkeit und damit die Lebensdauer des Aufzugriemens erhöhen.

Auf einer Rückseite des Riemenkörpers, die der zum Eingriff mit einem Treibrad vorgesehenen Traktionsseite gegenüberliegt, kann der Riemenkörper mit einer Rückenschicht verbunden sein, die insbesondere aus einem thermoplastischen Kunststoff, bevorzugt aus Polyamid (PA), Polyethylen (PE), Polyester, insbesondere Polyethylenterephthalat (PET) und/oder Polycarbonat (PC), Polypropylen (PP), Polybutylenterephthalat (PBT), Polyethersulfon (PES), Polytetrafluorethylen (PTFE), Polyvinylchlorid (PVC) oder Polyblend (Mischung aus zwei oder mehr verschiedenen Kunststoffen) und/oder einem Gewebe aus einem solchen thermoplastischem Kunststoff hergestellt ist. Das Gewebe kann in einem weiteren dieser thermoplastischen Kunststoffe eingebettet bzw. von diesem durchtränkt sein.

Eine solche Rückschicht kann eine abriebfeste und reibungsarme Rückseite des Aufzugriemens bilden, was insbesondere von Vorteil ist, wenn dieser mit seiner Rückseite Umlenkrollen umschlingt und auf diesen in Querrichtung, beispielsweise durch seitliche Bordscheiben, geführt werden muss. Besonders bevorzugt weist die Rückseite des Aufzugriemens daher mit einer Umlenkrolle einen Reibwert von höchstens 0,35, bevorzugt höchstens 0,3 und besonders bevorzugt höchstens 0,25 auf. Hierzu kann die Rückenschicht zusätzlich auf ihrer der Traktionsseite abgewandten Rückseite eine abriebfeste und/oder reibungsarme Beschichtung aufweisen, was die Lebensdauer bzw. den Wirkungsrad eines erfindungsgemäßen Aufzugriemens erhöht.

Zwischen dem Riemenkörper und der Rückenschicht können eine oder mehrere Zwischenschichten angeordnet sein. Eine solche Zwischenschicht kann beispielsweise die Verbindung zwischen Keilrippenanordnung und Rückenschicht verbessern. Zusätzlich oder alternativ kann eine Zwischenschicht den Aufzugriemen in seiner Längs- und/oder Querrichtung versteifen oder Schwingungen des Aufzugriemens dämpfen. Zu diesen Zwecken kann eine Zwischenschicht insbesondere ein Gewebe umfassen.

Auch die Rückenschicht kann auf ihrer Rückseite eine oder mehrere Keilrippen aufweisen. Damit wird auf vorteilhafte Weise erreicht, dass der Aufzugriemen auch beim Umlaufen von Riemenrädern geführt wird, auf denen er mit seiner Rückseite aufliegt. Die Anzahl der Keilrippen auf der Rückenschicht muss dabei nicht mit der Anzahl der Keilrippen der Keilrippenanordnung übereinstimmen.

Bei einer besonders bevorzugten Ausführungsform des Aufzugriemens liegt mindestens ein Zugträger oder mindestens ein Profilkörper an der Rückenschicht an. Vorzugsweise gilt dies für alle Zugträger und alle Profilkörper. Dadurch ist die lagerichtige Positionierung der Zugträger und/oder Profilkörper auch in der senkrecht zur Rückenschicht stehenden Richtung gewährleistet.

Profilkörper und/oder Rückenschicht können mit einem Haftvermittler zur Verbindung des Riemenkörpers mit dem Profilkörper bzw. der Rückenschicht beschichtet sein. Hierfür kommt beispielsweise ein beim Extrudieren reagierender Thermoklebstoff in Betracht. Durch den Haftvermittler wird die Verbindung zwischen Riemenkörper und Profilkörper bzw. zwischen Riemenkörper und Rückenschicht verbessert, wodurch sich die Lebensdauer des Aufzugriemens erhöht. Zudem können so Zugkräfte besser in die Profilkörper eingeleitet und von diesen übertragen werden.

Die Herstellung eines Aufzugriemens nach der vorliegenden Erfindung erfolgt vorzugsweise in einem Extrusionsverfahren. Bei diesem Extrusionsverfahren werden Zugträger und Profilkörper und gegebenenfalls auch eine Rückenschicht kontinuierlich und lagerichtig einem Riemenextrusionswerkzeug zugeführt, aus welchem kontinuierlich ein durch Wärme fliessfähig gemachter und durch eine Formdüse geformter Elastomerstrang ausgepresst wird, der den Riemenkörper bildet und die zugeführten Zugträger wie auch die Profilkörper aufnimmt. Gegebenenfalls wird der Riemenkörper gleichzeitig mit einer Rückenschicht verbunden. Die Profilkörper verhindern beim Extrusionsvorgang grössere Abweichungen der Zugträger von ihrer vorgesehenen Lage im Riemenkörper.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Aufzugriemen nach einer ersten Ausführung der vorliegenden Erfindung; und
- Fig. 2: einen Querschnitt durch einen Aufzugriemen nach einer zweiten Ausführung der vorliegenden Erfindung; und
- Fig. 3: einen zu einer Aufzugskabinenfront parallelen Schnitt durch eine Aufzugsanlage mit einem Riemen nach einer Ausführung der vorliegenden Erfindung.

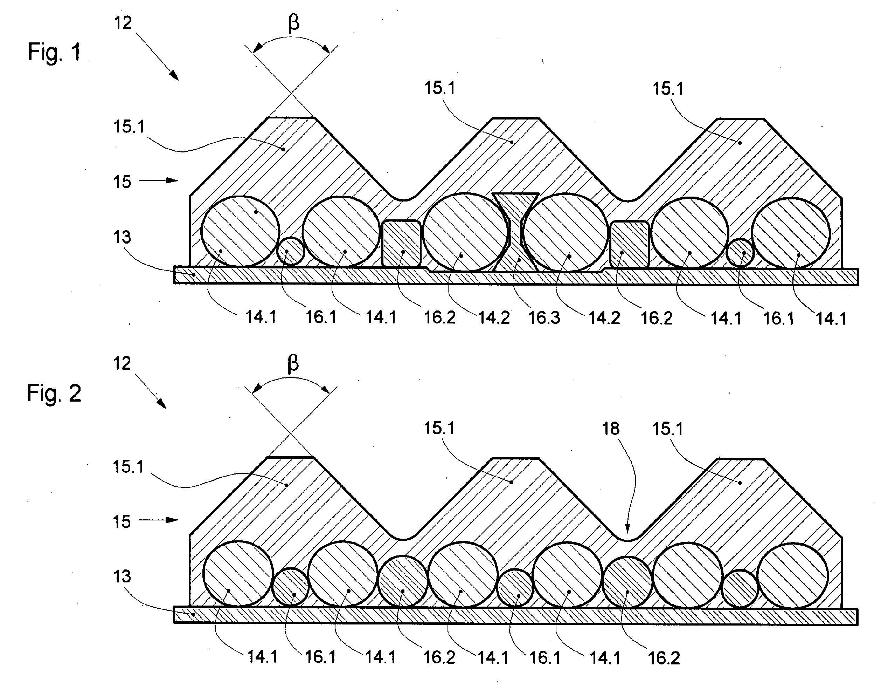

Fig. 1 zeigt einen Aufzugriemen 12 nach einer ersten Ausführung der vorliegenden Erfindung. Dieser umfasst einen Riemenkörper 15 aus Polyurethan mit einzelnen Keilrippen 15.1 und eine mit dem Riemenkörper verbundene Rückenschicht 13 aus Polyamid.

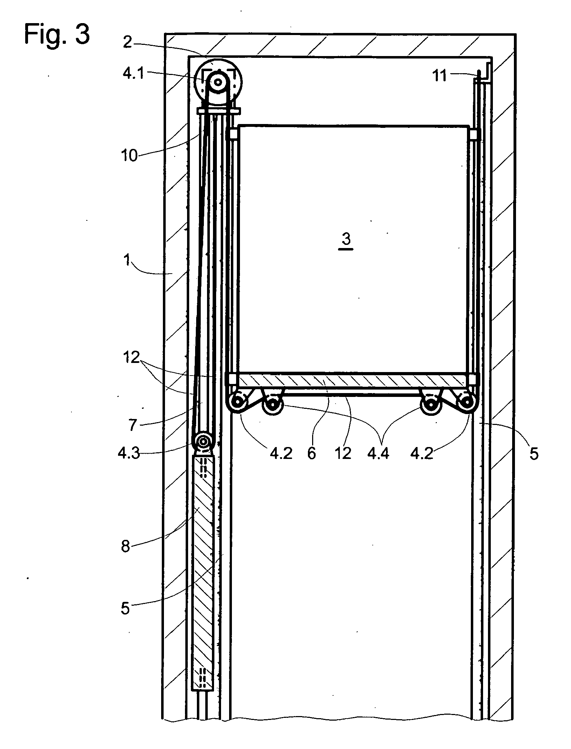

Die Keilrippen 15.1 weisen einen Flankenwinkel β von 90° auf und bilden eine Traktionsseite des Aufzugriemens 12 (in Fig. 1 oben) zum Eingriff mit einem Treibrad 4.1 (s. Fig. 3). Um einen zwischen den aus Polyurethan bestehenden Keilrippen 15.1 und dem Treibrad 4.1 gegebenen Reibwert zu verändern, kann der Aufzugriemen auf seiner Traktionsseite mit einer Beschichtung (nicht dargestellt) versehen werden. Beispielsweise können die in Kontakt mit einem im Wesentlichen komplementären Keilrillenprofil des Treibrades 4.1 kommenden Flanken der Keilrippen 15.1 mit einer dünnen Polyamidfolie beschichtet sein. Zur Vereinfachung der Herstellung kann gleichermaßen auch die gesamte Traktionsseite mit einer solchen Folie beschichtet sein.

In jeder Keilrippe 15.1 sind in ihrer der Rückenschicht 13 zugewandten Basis zwei Zugträger 14.1, 14.2 parallel zueinander angeordnet. Die Zugträger 14.1, 14.2 sind in nicht näher dargestellter Weise als Stahldrahtseil aus mehreren miteinander verseilten Litzen ausgebildet, die ihrerseits aus einzelnen miteinander verdrillten Einzeldrähten aus Stahl aufgebaut sind.

Zwischen je zwei benachbarten Zugträgern 14.1, 14.2 ist je ein Profilkörper 16.1, 16.2 aus Polyamid angeordnet. Dabei sind zwischen zwei benachbarten Zugträgern 14.1 äußerer Keilrippen 15.1 runde Profilträger 16.1 positioniert. Zwischen den zwei benachbarten Keilrippen 14.2 der mittleren Keilrippe 15.1, die einen größeren Durchmesser aufweisen, ist ein Doppel-T- oder sanduhrförmiger Profilkörper 16.3 angeordnet. Benachbarte Zugträger 14.1, 14.2 benachbarter Keilrippen 15.1 werden durch im Wesentlichen rechteckige Profilkörper 16.2 beabstandet.

Die Zugträger 14.1, 14.2 und die Profilkörper 16.1, 16.2 liegen in Riemenquerrichtung (Links-Rechts in Fig. 1) formschlüssig aneinander an. Damit wird erreicht, dass sich die Zugträger 14.1, 14.2 in der genannten Richtung über die Profilkörpern 16.1, 16.2 gegenseitig abstützen, woraus eine höhere Quersteifigkeit des gesamten Aufzugriemens 12 resultiert.

Zu Illustrationszwecken weisen in der ersten Ausführungsform gemäß Fig. 1 die Zugträger 14.1, 14.2 unterschiedliche Durchmesser und die Profilkörper 16.1, 16.2 und 16.3 unterschiedliche Querschnittsformen auf. Zugträger mit unterschiedlichen Durchmessern sind dabei so platziert, dass ihre Zentren auf derselben Geraden liegen. Vorzugsweise ist das Rückenprofil 13 zu diesem Zweck mit einer variablen Dicke ausgeführt.

In einer anderen, nicht dargestellten Ausführungsform weisen jeweils die Zugträger und/oder die Profilkörper gleiche Querschnitte auf, was die Herstellung und Bevorratung erleichtert und zu einem homogenen Aufzugriemen 12 führt. In einer weiteren Ausführungsform, die in Fig. 2 dargestellt ist, weisen alle Profilkörper 16.1, die jeweils in der Mitte einer Keilrippe 15.1 angeordnet sind, gleiche Querschnitte auf. Alle Profilkörper 16.2, die jeweils zwischen zwei benachbarten Keilrippen 15.1 angeordnet sind, haben ebenfalls gleiche Querschnitte, weisen jedoch mindestens eine größere Breite auf als die die innerhalb einer Keilrippe 15.1 angeordneten Profilkörper 16.1 und stellen so sicher, dass die Zugträger 14.1 ausreichend weit von dem zwischen benachbarten Keilrippen 15.1 ausgebildeten Rillengrund 18 beabstandet sind.

Die Herstellung eines Aufzugriemens 12 nach einer Ausführungsform der vorliegenden Erfindung erfolgt vorzugsweise in einem Extrusionsverfahren. Dabei werden die Zugträger 14.1, 14.2, die Profilkörper 16.1, 16.2, 16.3 sowie die Rückenschicht 13 kontinuierlich und lagerichtig einem Riemenextrusionswerkzeug zugeführt, wobei Zugträger und Profilkörper so geführt werden, dass zwischen ihnen praktisch kein Zwischenraum vorhanden ist. Aus dem Riemenextrusionswerkzeug wird kontinuierlich ein durch Wärme fliessfähig gemachter und durch eine Formdüse geformter Elastomerstrang ausgepresst, der den Riemenkörper 15 bildet und die zugeführten Zugträger wie auch die Profilkörper aufnimmt und sich gleichzeitig mit der Rückenschicht 13 verbindet. Die Profilkörper verhindern beim beschriebenen Herstellvorgang grössere seitliche Abweichungen der Zugträger von ihrer vorgesehenen Lage im Riemenkörper.

Die Rückenschicht 13 bildet an ihrer dem Riemenkörper 15 abgewandten Rückseite (in Fig. 1 unten) eine Gleitfläche aus, die bei einer Umlenkung des Aufzugriemens um ein Umlenkrad 4.2 (s. Fig. 3) mit dessen Peripherie in Kontakt steht. Diese Gleitfläche aus Polyamid weist einen geringen Reibwert und gleichzeitig eine hohe Abriebfestigkeit auf. Vorteilhaft verringern sich damit die zum seitlichen Führen des Aufzugriemens auf Umlenkrädern erforderlichen Führungskräfte zwischen seitlichen Bordscheiben der Umlenkräder und den seitlichen Borden des Aufzugsriemens. Dadurch wird die seitliche Reibungsbelastung bei der Umlenkung des Aufzugriemens und damit die erforderliche Antriebsleistung der Aufzugsanlage reduziert. Gleichzeitig verlängert sich die Lebensdauer des Aufzugriemens und der Umlenkräder.

Fig. 3 zeigt schematisch einen Schnitt durch ein in einem Aufzugsschacht 1 installiertes Aufzugssystem mit einem Aufzugriemen 12 nach einer Ausführungsform der vorliegenden Erfindung. Das Aufzugssystem umfasst einen in einem Aufzugsschacht 1 fixierten Antrieb 2 mit einem Treibrad 4.1, eine an Kabinenführungsschienen 5 geführte Aufzugskabine 3 mit unterhalb des Kabinenbodens 6 angebrachten, als Kabinentragrollen dienenden Umlenkrollen 4.2, ein an Gegengewichtsführungsschienen 7 geführtes Gegengewicht 8 mit einer als Gegengewichtstragrolle dienenden weiteren Umlenkrolle 4.3, sowie den Aufzugriemen 12 nach der vorstehend erläuterten ersten oder zweiten Ausführungsform der Erfindung, der die Aufzugskabine und das Gegengewicht trägt und auf diese die Antriebskraft vom Treibrad 4.1 der Antriebseinheit 2 überträgt.

Der Aufzugriemen 12 ist an einem seiner Enden unterhalb des Treibrades 4.1 an einem ersten Riemenfixpunkt 10 befestigt. Von diesem aus erstreckt er sich abwärts bis zu der als Gegengewichtstragrolle dienenden Umlenkrolle 4.3, umschlingt diese und erstreckt sich von dieser aus zum Treibrad 4.1, umschlingt dieses und verläuft entlang der gegengewichtsseitigen Kabinenwand abwärts, umschlingt auf beiden Seiten der Aufzugskabine je eine unterhalb der Aufzugskabine 3 angebrachte, als Kabinentragrolle dienende Umlenkrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die als Gegengewichtstragrolle dienende Umlenkrolle 4.3 sind an ihrer Peripherie mit Keilrillen versehen, die im Wesentlichen komplementär zu den Keilrippen 15.1 des Aufzugriemens 12 geformt sind. Wo der Aufzugriemen 12 eines der Riemenräder 4.1 oder 4.3 umschlingt, liegen die auf seiner Kontaktseite angeordneten Keilrippen 15.1 in korrespondierenden Keilrillen des Riemenrades, wodurch eine ausgezeichnete Führung des Aufzugriemens auf diesen Riemenrädern gewährleistet ist. Außerdem wird durch eine zwischen den Keilrillen des als Treibrad dienenden Riemenrades 4.1 und den Keilrippen 15.1 des Riemens 12 entstehende Keilwirkung die Traktionsfähigkeit verbessert.

Bei dem in Fig. 3 dargestellten Aufzugssystem erfolgt die Umschlingung der als Kabinentragrollen dienenden Umlenkrollen 4.2 unterhalb der Aufzugskabine 3 so, dass die die Keilrippen aufweisende Kontaktseite des Aufzugsriemens von der Peripherie der Umlenkrollen 4.2 abgewandt ist. Der Aufzugriemen liegt dabei mit seiner Rückenschicht an den Umlenkrollen 4.2 an, wobei diese Rückenschicht, wie vorstehend beschrieben, gegenüber den Umlenkrollen 4.2 einen niedrigen Reibungskoeffizient aufweist. Um die Seitenführung des Aufzugriemens in diesem Bereich zu gewährleisten, sind am Kabinenboden 6 zwei zusätzliche, mit Keilrillen versehene Führungsrollen 4.4 angebracht, deren Keilrillen mit den Keilrippen des Aufzugsriemens 12 als Seitenführung zusammenwirken.

In einer nicht dargestellten Abwandlung der vorstehend beschriebenen Ausführungsformen weisen auch die Rückseite des Aufzugriemens 12 und die als Kabinentragrollen dienenden Umlenkrollen 4.2 komplementäre Keilrippen auf. Bei der Umschlingung der Kabinentragrollen unterhalb der Aufzugskabine 3 ist daher eine ausgezeichnete seitliche Führung des Aufzugriemens 12 auf den als Kabinentragrollen dienenden Umlenkrollen 4.2 gegeben, da der Aufzugriemen Keilrippen auch auf seiner den als Kabinentragrollen dienenden Umlenkrollen 4.2 zugewandten Seite aufweist. Die in Fig.3 dargestellten und vorstehend erwähnten Führungsrollen 4.4 entfallen bei dieser Ausführungsform.

## Patentansprüche

1. Aufzugriemen (12) für eine Aufzuganlage, mit einem Riemenkörper (15), in dem eine Zugträgeranordnung (14) mit mehreren Zugträgern (14.1, 14.2) in Form von Litzen oder Seilen zur Übertragung einer Zugkraft in Längsrichtung des Aufzugriemens angeordnet ist, wobei die Zugträger (14.1, 14.2) nebeneinander in Richtung einer Breite des Aufzugriemens angeordnet sind,
**dadurch gekennzeichnet, dass**
zwischen benachbarten Zugträgern (14.1, 14.2) der Zugträgeranordnung (14) ein Profilkörper (16) angeordnet ist, der diese Zugträgern voneinander beabstandet, sodass Zugträger (14.1, 14.2) und Profilkörper (16) nebeneinander in Richtung der Breite des Aufzugriemens angeordnet sind.

2. Aufzugriemen nach Anspruch 1, **dadurch gekennzeichnet, dass** zwischen mehreren, bevorzugt zwischen allen Zugträgern der Zugträgeranordnung (14) je ein Profilkörper (16) angeordnet ist.

3. Aufzugriemen nach Anspruch 2, **dadurch gekennzeichnet, dass** alle Profilkörper (16) die gleiche Querschnittsform aufweisen.

4. Aufzugriemen nach Anspruch 2, **dadurch gekennzeichnet, dass** wenigstens zwei Profilkörper (16) unterschiedliche Querschnittsformen aufweisen.

5. Aufzugriemen nach einem der vorhergehenden Ansprüche, **dadurch gekennzeichnet, dass** ein Profilkörper einen im Wesentlichen kreisförmigen, ovalen (16.1),
T-förmigen, Doppel-T-förmigen (16.3), U-förmigen, drei- oder viereckigen (16.2) Querschnitt aufweist.

6. Aufzugriemen nach einem der vorhergehenden Ansprüche, **dadurch gekennzeichnet, dass** ein Profilkörper sich in Längsrichtung des Aufzugriemens (12), insbesondere im Wesentlichen über die gesamte Länge des Aufzugriemens erstreckt.

7. Aufzugriemen nach einem der vorhergehenden Ansprüche, **dadurch gekennzeichnet, dass** ein Profilkörper (16) aus einem thermoplastischen Kunststoff, insbesondere Polyamid (PA), Polyethylen (PE), Polyester, insbesondere Polyethylenterephthalat (PET) und/oder Polycarbonat (PC), Polypropylen (PP), Polystyrol (PS), Polyacetal (POM), Polybutylenterephthalat (PBT), Polyethersulfon (PES), Polyphenylensulfid (PPS), Polytetrafluorethylen (PTFE), Polyetheretherketon (PEEK) , Polyimid (PI), Polyvinylchlorid (PVC) oder einem Polyblend aus mehreren thermoplastischen Kunststoffen hergestellt ist.

8. Aufzugriemen nach einem der vorhergehenden Ansprüche, **dadurch gekennzeichnet, dass** der Riemenkörper (15) aus einem Elastomer, insbesondere Polyurethan (PU), Polychloropren (CR), Naturkautschuk oder Ethylen-Propylen-Dien-Kautschuk (EPDM) hergestellt ist.

9. Aufzugriemen nach einem der vorhergehenden Ansprüche, **dadurch gekennzeichnet, dass** der Riemenkörper (15) auf einer Traktionsseite zum Eingriff mit einem Treibrad (4.1) eine Beschichtung aufweist.

10. Aufzugriemen nach einem der vorhergehenden Ansprüche, **dadurch gekennzeichnet, dass** der Riemenkörper (15) auf einer Traktionsseite eine oder mehrere Keilrippen (15.1) zum Eingriff mit komplementären Rillen eines Treibrades (4.1) aufweist.

11. Aufzugriemen nach einem der vorhergehenden Ansprüche, **dadurch gekennzeichnet, dass** der Riemenkörper (15) auf einer Rückseite, die einer Traktionsseite zum Eingriff mit einem Treibrad (4.1) gegenüberliegt, eine Rückenschicht (13) aufweist, die insbesondere aus einem thermoplastischen Kunststoff, bevorzugt Polyamid (PA), Polyethylen (PE), Polyester, insbesondere Polyethylenterephthalat (PET) und/oder Polycarbonat (PC), Polypropylen (PP), Polybutylenterephthalat (PBT), Polyethersulfon (PES), Polytetrafluorethylen (PTFE), Polyvinylchlorid (PVC) oder Polyblend und/oder einem Gewebe aus einem solchen thermoplastischem Kunststoff hergestellt ist.

12. Aufzugriemen nach Anspruch 10, **dadurch gekennzeichnet, dass** Zugträger (14.1, 14.2) und/oder Profilkörper (16) an der Rückenschicht (13) anliegen.

13. Verfahren zur Herstellung eines Aufzugriemens (12) nach einem der vorhergehenden Ansprüche, **dadurch gekennzeichnet, dass** der Aufzugriemen in einem Extrusionsverfahren hergestellt wird, wobei Zugträger, Profilkörper und Rückenschicht kontinuierlich und lagerichtig einem Riemenextrusionswerkzeug zugeführt werden, aus welchem kontinuierlich ein durch Wärme fliessfähig gemachter und durch eine Formdüse geformter Elastomerstrang ausgepresst wird, der den Riemenkörper bildet und die zugeführten Zugträger wie auch die Profilkörper aufnimmt.

14. Verfahren zur Herstellung eines Aufzugriemens (12) nach Anspruch 13, **dadurch gekennzeichnet, dass** ein Profilkörper (16) und/oder eine Rückenschicht (13) mit einem Haftvermittler zur Verbindung des Riemenkörpers (15) mit dem Profilkörper (16) bzw. mit der Rückenschicht (13) beschichtet wird.

15. Verfahren zur Herstellung eines Aufzugriemens (12) nach Anspruch 14, **dadurch gekennzeichnet, dass** als Haftvermittler ein beim Extrudieren reagierender Thermoklebstoff verwendet wird.

16. Aufzugsanlage mit einer Aufzugkabine (3), einem Antrieb (2) und einer Riemenanordnung mit wenigstens einem.Aufzugriemen (12) nach einem der vorhergehenden Ansprüche.

## Claims

1. Lift belt (12) for a lift installation, with a belt body (15) in which a tensile carrier arrangement (14) with several tensile carriers (14.1, 14.2) in the form of strands or cables for transmission of a tension force in longitudinal direction of the lift belt is arranged, wherein the tensile carriers (14.1, 14.2) are arranged adjacent to one another in the direction of a width of the lift belt, **characterised in that** a profile body (16) is arranged between adjacent tensile carriers (14.1, 14.2) of the tensile carrier arrangement (14) and spaces these tensile carriers from one another, so that tensile carriers (14.1, 14.2) and profile body (16) are arranged adjacent to one another in the direction of the width of the lift belt.

2. Lift belt according to claim 1, **characterised in that** a respective profile body (16) is arranged between several, preferably between all, tensile carriers of the tensile carrier arrangement (14).

3. Lift belt according to claim 2, **characterised in that** all profile bodies (16) have the same cross-sectional shape.

4. Lift belt according to claim 2, **characterised in that** at least two profile bodies (16) have different cross-sectional shapes.

5. Lift belt according to any one of the preceding claims, **characterised in that** a profile body has a substantially circular, oval (16.1), T-shaped, double-T-shaped (16.3), U-shaped, triangular or quadrangular (16.2) cross-section.

6. Lift belt according to any one of the preceding claims, **characterised in that** a profile body extends in longitudinal direction of the lift belt (12), particularly substantially over the entire length of the lift belt.

7. Lift belt according to any one of the preceding claims, **characterised in that** a profile body (16) is made from a thermoplastic synthetic material, particularly polyamide (PA), polyethylene (PE), polyester, particularly polyethyleneterephthalate (PET) and/or polycarbonate (PC), polypropylene (PP), polystyrol (PS), polyacetal (POM), polybutyleneterephthalate (PBT), polyethersulfone (PES), polyphenylenesulfide (PFS) polytetrafluorethylene (PTFE), polyetheretherketone (PEEK), polyimide (PI), polyvinylchloride (PVC) or a polyblend of several thermoplastic synthetic materials.

8. Lift belt according to any one of the preceding claims, **characterised in that** the belt body (15) is made from an elastomer, particularly polyurethane (PU), polychloroprene (CR), natural rubber or ethylene-propylene-diene rubber (EPDM).

9. Lift belt according to any one of the preceding claims, **characterised in that** the belt body (15) has a coating on a traction side for engagement with a drive wheel (4.1).

10. Lift belt according to any one of the preceding claims, **characterised in that** the belt body (15) has, on a traction side, one or more wedge ribs (15.1) for engagement with complementary grooves of a drive wheel (4.1).

11. Lift belt according to any one of the preceding claims, **characterised in that** the belt body (15) has on a rear side, which is opposite a traction side for engagement with a drive wheel (4.1), a back layer (13) which is made from a thermoplastic synthetic material, preferably polyamide (PA), polyethylene (PE), polyester, particularly polyethyleneterephthalate (PET) and/or polycarbonate (PC), polypropylene (PP), polybutyleneterephthalate (PBT), polyethersulfone (PES), polytetrafluorethylene (PTFE), polyvinylchloride (PVC) or polyblend and/or a fabric of such a thermoplastic synthetic material.

12. Lift belt according to claim 10, **characterised in that** tensile carriers (14.1, 14.2) and/or profile bodies (16) bear against the back layer (13).

13. Method of producing a lift belt (12) according to any one of the preceding claims, **characterised in that** the lift belt is produced in an extrusion method, wherein tensile carriers, profile bodies and back layer are fed continuously and correct in position to a belt extrusion tool from which an elastomeric strand, which is rendered flowable by heat and shaped by a shaping nozzle and which forms the belt body and receives the supplied tensile carriers as well as the profile bodies, is continuously extruded.

14. Method of producing a lift belt (12) according to claim 13, **characterised in that** a profile body (16) and/or a back layer (13) is or are coated with an adhesion promoter for connecting the belt body (15) with the profile body (16) or with the back layer (13).

15. Method of producing a lift belt (12) according to claim 14, **characterised in that** a thermo-adhesive reacting during extruding is used as adhesion promoter.

16. Lift installation with a lift cage (3), a drive (2) and a belt arrangement with at least one lift belt (12) according to one of the preceding claims.

## Revendications

1. Courroie d'ascenseur (12) pour une installation d'ascenseur, avec un corps de courroie (15) dans lequel est disposé un dispositif à supports de traction (14) comprenant plusieurs supports de traction (14.1, 14.2) en forme de torons ou de câbles pour transmettre une force de traction dans le sens longitudinal de la courroie d'ascenseur, les supports de traction (14.1, 14.2) étant disposés côte à côte dans le sens d'une largeur de ladite courroie d'ascenseur,
**caractérisée en ce qu'**il est prévu entre des supports de traction voisins (14.1, 14.2) du dispositif à supports de traction (14) un corps profilé (16) qui espace ces supports de traction les uns des autres, de sorte que les supports de traction (14.1, 14.2) et le corps profilé (16) sont disposés côte à côte dans le sens de la largeur de la courroie d'ascenseur.

2. Courroie d'ascenseur selon la revendication 1, **caractérisée en ce qu'**il est prévu entre plusieurs supports de traction, de préférence entre tous les supports de traction du dispositif à supports de traction (14), un corps profilé (16).

3. Courroie d'ascenseur selon la revendication 2, **caractérisée en ce que** tous les corps profilés (16) ont la même forme de section transversale.

4. Courroie d'ascenseur selon la revendication 2, **caractérisée en ce qu'**au moins deux corps profilés (16) ont des formes de section transversale différentes.

5. Courroie d'ascenseur selon l'une des revendications précédentes, **caractérisée en ce qu'**un corps profilé a une section transversale globalement ronde, ovale (16.1), en T, en double T (16.3), en U, triangulaire ou quadrangulaire (16.2).

6. Courroie d'ascenseur selon l'une des revendications précédentes, **caractérisée en ce qu'**un corps profilé s'étend dans le sens longitudinal de la courroie d'ascenseur (12), en particulier globalement sur toute la longueur de la courroie d'ascenseur.

7. Courroie d'ascenseur selon l'une des revendications précédentes, **caractérisée en ce qu'**un corps profilé (16) est fabriqué à partir d'une matière thermoplastique, en particulier de polyamide (PA), de polyéthylène (PE), de polyester, en particulier de polyéthylène téréphtalate (PET) et/ou de polycarbonate (PC), de polypropylène (PP), de polystyrène (PS), de polyacétal (POM), de polybutylène téréphtalate (PBT), de polyéther sulfone (PES), de poly(sulfure de phénylène) (PPS), de polytétrafluoréthylène (PTFE), de polyétheréthercétone (PEEK), de polyimide (PI), de poly(chlorure de vinyle) (PVC) ou d'un mélange polymère composé de plusieurs matières thermoplastiques.

8. Courroie d'ascenseur selon l'une des revendications précédentes, **caractérisée en ce que** le corps de courroie (15) est fabriqué à partir d'un élastomère, en particulier de polyuréthanne (PU), de polychloroprène (CR), de caoutchouc naturel ou de caoutchouc éthylène propylène diène (EPDM).

9. Courroie d'ascenseur selon l'une des revendications précédentes, **caractérisée en ce que** le corps de courroie (15), sur un côté traction destinée à coopérer avec une poulie motrice (4.1), présente un revêtement.

10. Courroie d'ascenseur selon l'une des revendications précédentes, **caractérisée en ce que** le corps de courroie (15), sur un côté traction, présente une ou plusieurs nervures cunéiformes (15.1) destinées à venir en prise avec des rainures complémentaires d'une poulie motrice (4.1).

11. Courroie d'ascenseur selon l'une des revendications précédentes, **caractérisée en ce que** le corps de courroie (15), sur un côté arrière opposé à un côté traction destiné à venir en prise avec une poulie motrice (4.1), présente un revêtement (13) qui est fabriqué en particulier à partir d'une matière thermoplastique, de préférence de polyamide (PA), de polyéthylène (PE), de polyester, en particulier de polyéthylène téréphtalate (PET) et/ou de polycarbonate (PC), de polypropylène (PP), de polybutylène téréphtalate (PBT), de polyéther sulfone (PES), de polytétrafluoréthylène (PTFE), de poly(chlorure de vinyle) (PVC) ou d'un mélange polymère et/ou d'un tissu composé d'une matière thermoplastique de ce type.

12. Courroie d'ascenseur selon la revendication 10, **caractérisée en ce que** des supports de traction (14.1, 14.2) et/ou des corps profilés (16) sont appliqués sur la couche arrière (13).

13. Procédé pour fabriquer une courroie d'ascenseur (12) selon l'une des revendications précédentes, **caractérisé en ce qu'**on fabrique la courroie d'ascenseur par extrusion, les supports de traction, les corps profilés et la couche arrière étant amenés en continu et dans la bonne position dans un outil d'extrusion de courroies d'où est expulsé en continu un boudin qui est rendu fluide par la chaleur et formé par une filière et qui forme le corps de courroie et reçoit les supports de traction amenés ainsi que les corps profilés.

14. Procédé pour fabriquer une courroie d'ascenseur (12) selon la revendication 13, **caractérisé en ce qu'**on enduit un corps profilé (16) et/ou une couche arrière (13) d'un agent adhésif pour relier le corps de courroie (15) au corps profilé (16) ou à la couche arrière (13).

15. Procédé pour fabriquer une courroie d'ascenseur (12) selon la revendication 14, **caractérisé en ce qu'**on utilise comme agent adhésif une colle thermique qui réagit lors de l'extrusion.

16. Installation d'ascenseur avec une cabine d'ascenseur (3), un entraînement (2) et un dispositif à courroie comprenant au moins une courroie d'ascenseur (12) selon l'une des revendications précédentes.
